# EUROPEAN PATENT SPECIFICATION

(11) **EP 1 603 053 B1**
(45) Date of publication and mention of the grant of the patent: **09.05.2012**
(21) Application number: 05104560.7
(22) Date of filing: 27.05.2005
(51) Int. Cl.: G06F 17/24, G06F 17/30

(54) **Method and apparatus for viewing and interacting with speadsheet from within a web browser**
Verfahren und Anordnung zur Anzeige und Bearbeitung einer Kalkulationstabelle innerhalb eines Browsers
Procédé et dispositif d'affichage et du traitement d'un feuille de calcul dans un navigateur

(30) Priority: 01.06.2004 US 858188
(43) Date of publication of application: 07.12.2005
(73) Proprietor: MICROSOFT CORPORATION, Redmond, Washington 98052-6399 (US)
(72) Inventor: Battagin, Daniel C., 98052, Redmond (US); Ben-Tovim, Yariv, 98052, Redmond (US)
(74) Representative: Grünecker, Kinkeldey, Stockmair & Schwanhäusser

(56) References cited:
- EP-A- 1 367 514
- WO-A-02/03595
- US-A1- 2004 006 539
- US-A1- 2004 015 783

## Description

### BACKGROUND OF THE INVENTION

With the advent and explosion of the Internet, computer users have grown accustomed to conveniently accessing virtually any kind of electronic document from virtually any location. In particular, the proliferation of the World Wide Web (the "Web") and Web browser application programs has made accessing many kinds of documents, such as text and graphics documents, very convenient. Through a Web browser application program, a user can access and view many types of electronic documents without the need for any additional software.

For some types of electronic documents, however, Web browsers are incapable of rendering the documents without the use of additional software. For example, for electronic documents that are not natively renderable by a Web browser application program, a helper or "plug-in" program must be utilized in conjunction with the Web browser application to enable viewing of the documents. One such type of document that requires the use of a plug-in to be viewable within the context of a Web browser application is the electronic spreadsheet document.

In the past, electronic spreadsheet documents (referred to herein as "spreadsheets" or "workbooks"), have not been viewable within the context of a Web browser application program without the use of a plug-in. However, the use of a plug-in can be frustrating for a computer user for a number of reasons. First, if the user is connected to the Internet via a slow connection, it may take a considerable amount of time to download and install the plug-in. Second, because plug-ins are typically written for use with a particular brand of Web browser, a plug-in may be unavailable or incompatible with the Web browser application utilized by the user. Additionally, the user may also be disappointed that in many cases, the plug-in provides only the ability to view the spreadsheet, and even when it does allow the user the ability to interact with and edit the spreadsheet, the interaction and editing environment do not match that of the fully functioned spreadsheet application program in which the spreadsheet was authored. As an alternative to utilizing a Web browser plug-in, a user could utilize a spreadsheet application program to save a version of the spreadsheet in the hypertext markup language ("HTML") format. The user could then access the HTML version of the spreadsheet with a Web browser application. However, this method requires a user to manually save the spreadsheet file as an HTML file. Moreover, viewing the HTML version of a spreadsheet in a Web browser also does not provide the ability to interact with or edit the spreadsheet. Furthermore, viewing an HTML version of the spreadsheet using previous solutions does not provide a visual interface substantially similar to the spreadsheet application program with which the user may be familiar.

It is with respect to these considerations and others that the various embodiments of the present invention have been made.

EP 1 367 514 is directed to a method in connection with a spreadsheet program. A spreadsheet is analysed and a representation or a "copy" is created that can be used without the original spreadsheet program used when creating the spreadsheet. The copy is only a viewer, which means that the end user cannot redefine the formulas of the spreadsheet; only the constants can be changed. A spreadsheet creator creates a spreadsheet using his spreadsheet program. The spreadsheet is compiled and the result is a combination of HTML and JavaScript. The HTML/JavaScript-file is deployed on a web-server. An end user uses his web-browser to access the HTML/JavaScript-file on the web-server, and the HTML/JavaScript-file is downloaded to the browser as any other web-page.

US 2004/0015783 is directed to methods for interactively defining transformations and for generating queries by manipulating existing query data. A data browsing application is executed as a software application on a local computer connected to an intranet or the Internet. The data browsing application communicates with any number of distributed heterogeneous data sources via the internet. The data browsing application has access to a data base within a local computer that stores URI of interest to the user as well as mapping information required to transform data from the data sources into the view desired by the user.

### BRIEF SUMMARY OF THE INVENTION

The invention provides a method according to claim 1 and a system according to claim 7.

In accordance with the present invention, the above and other problems are solved by a method, system, and apparatus for enabling a spreadsheet, or a workbook that includes one or more spreadsheets, to be viewed and modified within the context of a Web browser application program. According to aspects of the invention, no additional software, such as a helper application or "plug-in," is required to view and interact with the spreadsheet or workbook from within the Web browser application. Moreover, when rendered in the Web browser, the spreadsheet will be displayed in a manner that is substantially similar to the spreadsheet when displayed by a spreadsheet application program.

According to one aspect of the invention, a method is provided for viewing and interacting with a spreadsheet from within the context of a Web browser application program. According to the method, a request may be received to open a spreadsheet document in the Web browser application program. In response to the request, a representation of the spreadsheet document capable of being rendered by the Web browser application program is generated. The representation of the spreadsheet document is then transmitted to the Web browser application program. The Web browser application program then provides a viewable version of the spreadsheet document by rendering the representation of the spreadsheet document.

According to other aspects of the invention, the viewable version of the spreadsheet is rendered so that it appears substantially similar to a visual display provided by a spreadsheet application program when utilized to view the spreadsheet document. Moreover, the representation of the spreadsheet document includes only markup language tags for use in rendering the representation of the spreadsheet document along with scripts executable within the context of the Web browser for providing interactivity with the viewable version of the spreadsheet. No additional plug-ins or helper applications are required to provide interactivity with the viewable version of the spreadsheet within the Web browser.

According to other aspects of the method, a user request may be received to modify an aspect of the spreadsheet from within the Web browser. In response to the request, a script may be executed in the context of the Web browser to cause the requested modification to be performed. In particular, executing the script may include transmitting data identifying the requested modification to a server computer. The server computer may receive the data and, in response thereto, may generate a recalculated spreadsheet document that reflects the requested modification. The server computer may then generate a representation of the recalculated spreadsheet document capable of being rendered by the Web browser application program and transmit the representation of the recalculated spreadsheet document to the Web browser application program, where it is rendered.

According to other aspects of the invention, another method for viewing and interacting with a spreadsheet from within a Web browser application program is provided. According to this method, a request generated from within a Web browser application program is received for a workbook that includes one or more spreadsheets. In response to the request, the requested workbook is retrieved and calculated. The calculated workbook is then converted to the extensible markup language spreadsheet format ("XMLSS"). The XMLSS version of the workbook is then converted from the XMLSS format into a renderable document. According to various aspects of the invention, the renderable document includes HTML and scripts capable of being rendered by the Web browser application. The scripts provide functionality for editing and interacting with the spreadsheet from within the context of the Web browser. Once the renderable document has been generated, a response is provided to the request for a workbook by providing the renderable document.

According to other aspects of the method, the renderable document may include only markup language tags for use in rendering the representation of the workbook and scripts executable within the context of the Web browser for providing interactivity with the viewable version of the workbook. Moreover, according to other aspects of the invention, the renderable document is rendered within the Web browser so that it appears substantially similar to a visual display provided by a spreadsheet application program when it is utilized to view the requested workbook.

According to yet other aspects of the invention, a system is provided for allowing a spreadsheet to be viewed and modified from within the context of a Web browser application program. The system includes a first server computer operative to execute program code for receiving a request for a renderable version of a spreadsheet from the Web browser application program. The first server computer is also operative to request from a second server computer a version of the spreadsheet expressed using the XMLSS format. When the first server computer receives the XMLSS version of the spreadsheet, it is also operative to convert the XMLSS version of the spreadsheet to a renderable version of the spreadsheet, and to respond to the request from the Web browser with the renderable version of the spreadsheet. The renderable version of the spreadsheet document includes only markup language tags for use in rendering the spreadsheet document and scripts executable within the Web browser for providing interactivity with the viewable version of the spreadsheet. Moreover, the renderable version of the spreadsheet appears substantially similar to a visual display provided by a spreadsheet application program when utilized to view the native version of the spreadsheet.

The system also includes a second server computer operative to receive requests from the first server computer for the XMLSS version of the spreadsheet. In response to such a request, the second server computer is further operative to retrieve a native version of the spreadsheet from a database, to convert the native version of the spreadsheet to an XMLSS version of the spreadsheet, and to respond to the request from the first server computer with the XMLSS version of the spreadsheet.

The invention may be implemented as a computer process, a computing system, or as an article of manufacture such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process.

These and various other features, as well as advantages, which characterize the present invention, will be apparent from a reading of the following detailed description and a review of the associated drawings.

### BRIEF DESCRIPTION OF THE SEVERAL VIEWS OF THE DRAWINGS

FIGURE 1 is a computer system architecture diagram illustrating a computer system utilized in and provided by the various embodiments of the invention;
FIGURE 2 is a network architecture diagram illustrating an illustrative operating environment for embodiments of the invention;
FIGURES 3 and 6 are process diagrams showing aspects of an illustrative process for enabling the viewing and editing of a spreadsheet document from within the context of a Web browser; and
FIGURES 4-5 and 7-9 are screen diagrams illustrating display screens provided by the various aspects of the invention.

### DETAILED DESCRIPTION OF THE INVENTION

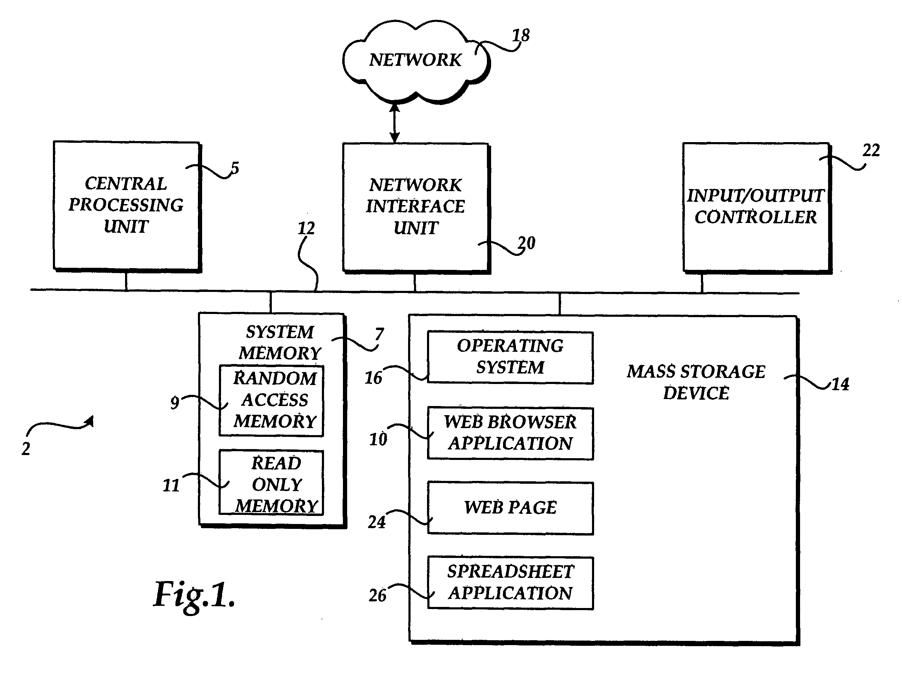

Referring now to the drawings, in which like numerals represent like elements, various aspects of the present invention will be described. In particular, FIGURE 1 and the corresponding discussion are intended to provide a brief, general description of a suitable computing environment in which embodiments of the invention may be implemented. While the invention will be described in the general context of program modules that execute on server and personal computer systems, those skilled in the art will recognize that the invention may also be implemented in combination with other types of computer systems and program modules.

Generally, program modules include routines, programs, components, data structures, and other types of structures that perform particular tasks or implement particular abstract data types. Moreover, those skilled in the art will appreciate that the invention may be practiced with other computer system configurations, including handheld devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

Referring now to FIGURE 1, an illustrative computer architecture for a computer 2 utilized in the various embodiments of the invention will be described. The computer architecture shown in FIGURE 1 illustrates a conventional desktop or laptop computer, including a central processing unit 5 ("CPU"), a system memory 7, including a random access memory 9 ("RAM") and a read-only memory ("ROM") 11, and a system bus 12 that couples the memory to the CPU 5. A basic input/output system containing the basic routines that help to transfer information between elements within the computer, such as during startup, is stored in the ROM 11. The computer 2 further includes a mass storage device 14 for storing an operating system 16, application programs, and other program modules, which will be described in greater detail below.

The mass storage device 14 is connected to the CPU 5 through a mass storage controller (not shown) connected to the bus 12. The mass storage device 14 and its associated computer-readable media provide non-volatile storage for the computer 2. Although the description of computer-readable media contained herein refers to a mass storage device, such as a hard disk or CD-ROM drive, it should be appreciated by those skilled in the art that computer-readable media can be any available media that can be accessed by the computer 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, digital versatile disks ("DVD"), or other optical storage, magnetic cassettes, magnetic tape, magnetic disk storage or other magnetic storage devices, or any other medium which can be used to store the desired information and which can be accessed by the computer 2.

According to various embodiments of the invention, the computer 2 may operate in a networked environment using logical connections to remote computers through a network 18, such as the Internet. The computer 2 may connect to the network 18 through a network interface unit 20 connected to the bus 12. It should be appreciated that the network interface unit 20 may also be utilized to connect to other types of networks and remote computer systems. The computer 2 may also include an input/output controller 22 for receiving and processing input from a number of other devices, including a keyboard, mouse, or electronic stylus (not shown in FIGURE 1). Similarly, an input/output controller 22 may provide output to a display screen, a printer, or other type of output device.

As mentioned briefly above, a number of program modules and data files may be stored in the mass storage device 14 and RAM 9 of the computer 2, including an operating system 16 suitable for controlling the operation of a networked personal computer, such as the WINDOWS XP operating system from MICROSOFT CORPORATION of Redmond, Washington. The mass storage device 14 and RAM 9 may also store one or more program modules. In particular, the mass storage device 14 and the RAM 9 may store a Web browser application program 10. As known to those skilled in the art, the Web browser application program 10 is operative to request, receive, render, and provide interactivity with electronic documents, such as a Web page 24 that has been formatted using HTML. Moreover, the Web browser application program 10 may be operative to execute scripts contained in the Web page 24, such as scripts expressed utilizing the JAVA SCRIPT language from SUN MICROSYSTEMS, INC. According to one embodiment of the invention, the Web browser application program 10 comprises the INTERNET EXPLORER Web browser application program from MICROSOFT CORPORATION. It should be appreciated, however, that other Web browser application programs from other manufacturers may be utilized to embody the various aspects of the present invention, such as the FIREFOX Web browser application from the MOZILLA FOUNDATION.

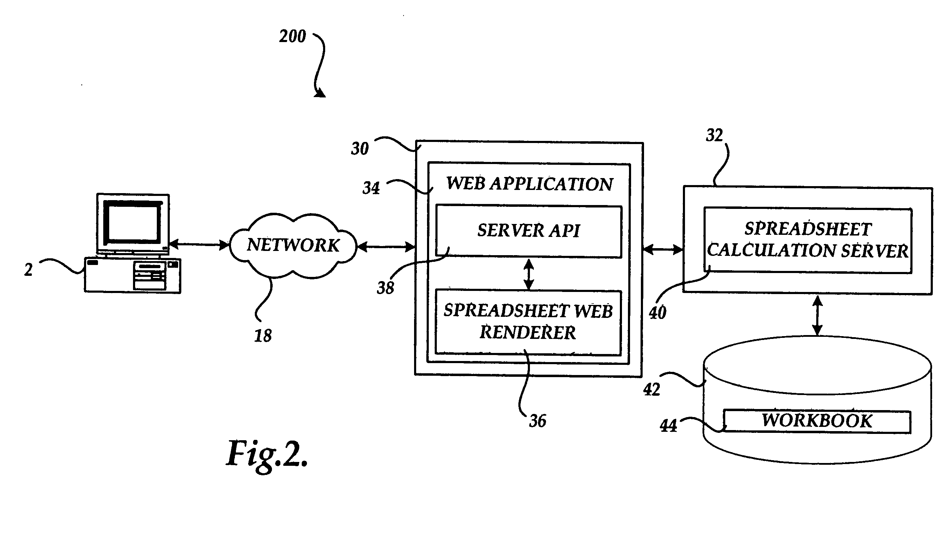

As will be described in greater detail below, the Web page 24 may comprise a viewable representation of a spreadsheet document. In particular, the Web page 24 may include HTML and scripts which, when displayed by the Web browser application 10, provide a visual display for a spreadsheet. Moreover, the scripts included in the Web page 24 allow a user of the computer to interact with the display provided by the Web browser application 10 and modify the spreadsheet. From the visual display provided by the Web browser application 10, the user may also be permitted to request that the native spreadsheet file be opened in a spreadsheet application program 26. In response to such a request, the spreadsheet application 26 will be launched and the native spreadsheet file corresponding to the spreadsheet expressed by the Web page 24 will be loaded by the spreadsheet application program 26. The spreadsheet application program 26 may comprise the EXCEL spreadsheet application program from MICROSOFT CORPORATION or another spreadsheet application program from another manufacturer. Additional details regarding the process for viewing and interacting with a spreadsheet from within the context of the Web browser application 10 will be provided below with respect to FIGURES 2-9.

Referring now to FIGURE 2, a network architecture diagram will be described that illustrates an operating environment for the various embodiments of the invention. As shown in FIGURE 2, the computer 2 is connected to a network 18. Also connected to the network 18 is an application server 30. The application server 30 comprises a server computer which may contain some or all the conventional computing components described above with respect to FIGURE 1. Additionally, the application server 30 is operative to execute a Web server application for receiving and responding to requests for documents stored at or accessible to the application server 30. Moreover, the application server 30 is operative to receive and respond to requests for pages generated by a Web application 34. It should be appreciated that the Web application 34 may comprise code executable at the application server 30, executable code for communicating with other computers, and may include templates, graphics, audio files, and other content known to those skilled in the art.

According to one aspect of the invention, the Web application 34 is operative to provide an interface to a user of the computer 2 to interact with a spreadsheet or workbook accessible via the network 18. In particular, the Web application 34 utilizes a server application programming interface ("API") 38. According to this embodiment of the invention, the server API 38 is operative to enable communication with a spreadsheet calculation server 32. The spreadsheet calculation server 32 is operative to execute a spreadsheet calculation server program 40. The spreadsheet calculation server program 40 comprises an executable program for retrieving and calculating spreadsheets, and such as the workbook 44 stored in the database 42. It should be appreciated that in the embodiments of the invention described herein, the spreadsheet calculation server program 40 comprises the EXCEL CALCULATION SERVER program from MICROSOFT CORPORATION. However, other programs for calculating a spreadsheet on a server computer may be utilized. It should also be appreciated that the calculation server 32 may include many of the conventional hardware and software components discussed above with respect to FIGURE 1.

As will be discussed in greater detail below, the computer 2 may transmit a request to the application server 30 to view the workbook 44 within the context of the Web browser application 10. In response to such a request, the Web application 34 communicates with the calculation server 32 through the server API 38. In particular, the Web application 34 requests from the calculation server 32 the appropriate workbook 44. As will be discussed in greater detail below, in response to such a request, the calculation server program 40 retrieves the workbook 44 and converts the workbook 44 into the XMLSS format. As known to those skilled in the art, the XMLSS format comprises a markup language schema for expressing the contents of a spreadsheet. Once the spreadsheet calculation server program 40 has converted the requested workbook 44 to the XMLSS format, the XMLSS formatted file is returned to the Web application 34.

Once the Web application 34 has received from the calculation server 32 the XMLSS representation of the workbook 44, the application server 30 utilizes the spreadsheet Web renderer 36 to convert the XMLSS formatted spreadsheet into a representation of the spreadsheet that may be rendered by the Web browser application 10. In particular, the spreadsheet Web renderer 36 converts an XMLSS formatted document into a document containing HTML that may be rendered by the Web browser application 10 to display the spreadsheet. Moreover, according to embodiments of the invention, the spreadsheet Web renderer 36 is capable of outputting HTML which, when rendered by the Web browser application 10, appears substantially similar to the output of the spreadsheet application 26 when utilized to view the same workbook 44. Once the spreadsheet Web renderer 36 has completed rendering the file, it is returned by the application server 30 to the computer 2 where it may be rendered by the Web browser application 10.

As will also be discussed in greater detail below, the spreadsheet Web renderer 36 may also be operative to render into the markup language file one or more scripts for allowing the user of the computer 2 to interact with the spreadsheet within the context of the Web browser application 10. In order to provide this functionality, the spreadsheet Web renderer 36 is operative to render script code that is executable by the Web browser application 10 into the returned Web page. The scripts may provide functionality, for instance, for allowing a user to view a larger portion of the spreadsheet, to modify pivot tables contained within the spreadsheet, to load the native version of the spreadsheet in the spreadsheet application 26, and to perform other functions.

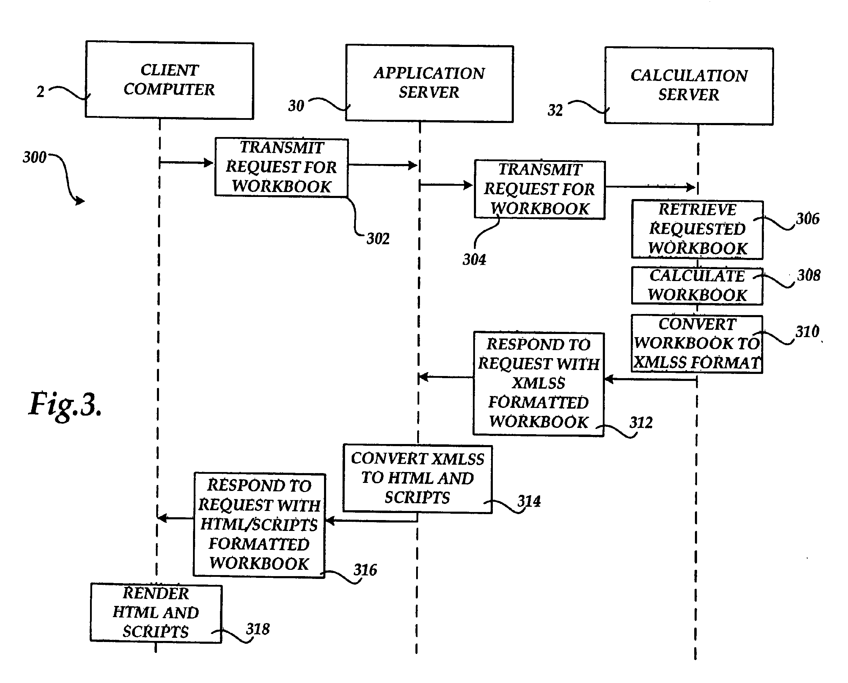

In order to provide interactivity with the spreadsheet within the context of the Web browser application 10, the Web browser application 10 receives user input. In response to certain types of user input, the scripts may be executed. When a script is executed, a response may be transmitted to the application server 30 indicating an element within the spreadsheet that has been acted upon, to identify the type of interaction that was made, and to further identify to the Web application 34 the function that should be performed upon the appropriate element. In response to receiving such a request, the Web application may make additional requests to the calculation server 32 for an updated workbook 44. In response thereto, the spreadsheet calculation server program 40 may recalculate the workbook 44 in view of the user action and provide an XMLSS formatted representation of the updated workbook to the Web application 34. The spreadsheet Web renderer 36 is then operative to render the updated workbook into a format renderable by the Web browser application 10. The Web application 34 is then operative to transmit the updated spreadsheet to the computer 2 where it may be rendered by the Web browser application 10. This process may be repeated any number of times as the user interacts with the spreadsheet from within the context of the Web browser application 10. When a user is finished editing the spreadsheet within the Web browser application 10, any changes made to the spreadsheet may be propagated through the Web application 34, the calculation server 32, and to the workbook 44 stored in the database 42. Additional details regarding these various processes will be provided below with respect to FIGURES 3-9.

Referring now to FIGURE 3, an illustrative routine 300 will be described illustrating a process for viewing and interacting with a spreadsheet from within the context of a Web browser application program. It should be appreciated that although the embodiments of the invention described herein are presented in the context of a Web browser application program, the invention may be utilized in other types of application programs that support the rendering of markup language documents. For instance, the embodiments of the invention described herein may be utilized within a personal information manager application program, a presentation application program, a drawing or computer-aided design application program, or a database application program in order to allow the rendering of and interaction with a document without requiring a dedicated application program.

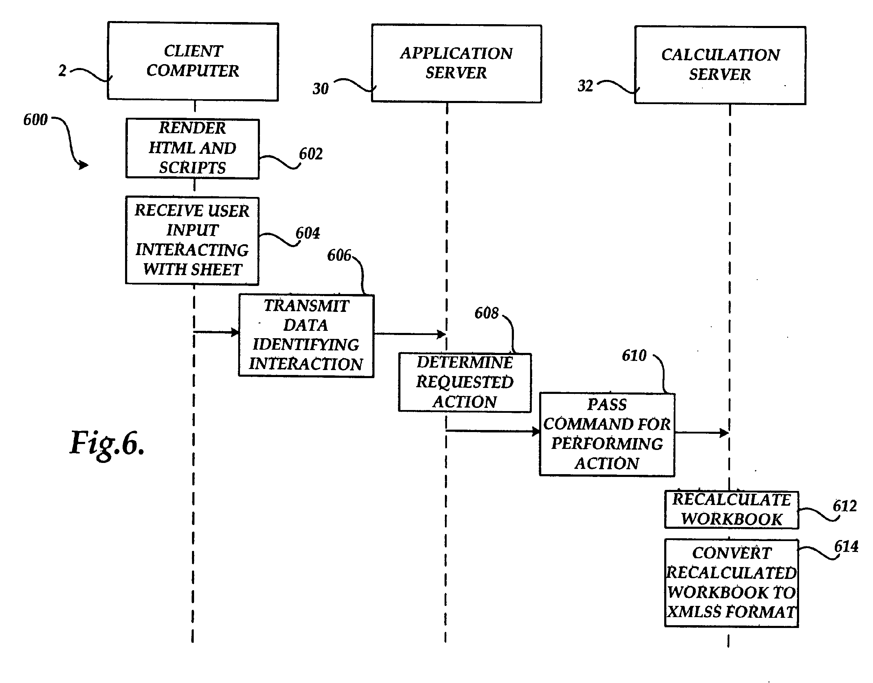

When reading the discussion of the routines presented herein, it should be appreciated that the logical operations of various embodiments of the present invention are implemented (1) as a sequence of computer implemented acts or program modules running on a computing system and/or (2) as interconnected machine logic circuits or circuit modules within the computing system. The implementation is a matter of choice dependent on the performance requirements of the computing system implementing the invention. Accordingly, the logical operations illustrated in FIGURES 3 and 6, and making up the embodiments of the present invention described herein are referred to variously as operations, structural devices, acts or modules. It will be recognized by one skilled in the art that these operations, structural devices, acts and modules may be implemented in software, in firmware, in special purpose digital logic, and any combination thereof without deviating from the scope of the present invention as recited within the claims attached hereto.

The routine 300 begins at operation 302, where the client computer 2 transmits to the application server 30 a request for the workbook 44. The request may be transmitted by the computer 2 in response to a user requesting through the Web browser application 10 that the workbook 44 be opened for viewing and editing within the Web browser application 10. It should be appreciated that the application server 30 may provide a Web based interface 30 for allowing a user to view the available workbooks and to select one of the workbooks for viewing and editing.

From operation 302, the routine 300 continues to operation 304, where the application server 30 transmits a request to the calculation server 32 for the workbook 44. In particular, the Web application 34 may utilize the server API 38 to communicate with the spreadsheet calculation server program 40. Through this communication path, a request may be made for the workbook 44.

From operation 304, the routine 300 continues to operation 306, where the spreadsheet calculation server program 40 retrieves the requested workbook 44 from the database 42. The spreadsheet calculation server program 40 then calculates the contents of the workbook 44 at operation 308. The calculation operation 308 may include calculations similar to those performed by a spreadsheet application 26 when recalculating the workbook 44.

Once the calculation server 32 has calculated the workbook 44, the spreadsheet calculation server program 40 is also operative to convert the calculated workbook to the XMLSS format. As discussed above, the XMLSS format comprises a markup language schema for describing the contents of a spreadsheet. It should be appreciated that, according to aspects of the invention, only a portion of the workbook 44 is converted to the XMLSS format. This allows only a displayable portion of the spreadsheet to be returned to the computer 2. Additional portions may be requested through the interface provided by the Web page 24. Alternatively, the entire workbook 44 may be converted to the XMLSS format and returned to the application server 30.

At operation 312, the calculation server 32 responds to the request from the application server 30 with the XMLSS formatted workbook. The routine 300 then continues to operation 314, where the spreadsheet Web renderer 36 executing on the application server 30 converts the XMLSS formatted workbook to a format that can be rendered and displayed by the Web browser application 10. In particular, the spreadsheet Web renderer 36 converts the XMLSS workbook to a Web page 24 that includes both HTML and scripts. The HTML is utilized by the Web browser 10 to display the contents of the requested workbook 44. The scripts are utilized by the Web browser application 10 to allow a user to interact with the rendered version of the spreadsheet within the context of the Web browser application 10.

From operation 314, the routine 300 continues to operation 316, where the application server responds to the original request from the computer 2 for the workbook 44. In particular, the application server 30 transmits the Web page 24 to the computer 2 that includes the HTML and scripts necessary to view and interact with the workbook 44 within the context of the Web browser application 10.

Once the computer 2 has received the Web page 24, the Web browser application 10 is operative to render the contents of the Web page 24. In particular, the HTML is rendered in order to provide a view of the workbook 44 that is substantially similar to that which would be provided by the spreadsheet application 26 if the same workbook 44 were opened utilizing the spreadsheet application 26. Moreover, the Web browser application 10 is operative to render the scripts so that a user of the computer 2 may interact with the spreadsheet within the context of the Web browser application 10. Additional details regarding the interaction with the spreadsheet by a user will be provided below with respect to FIGURES 6-9.

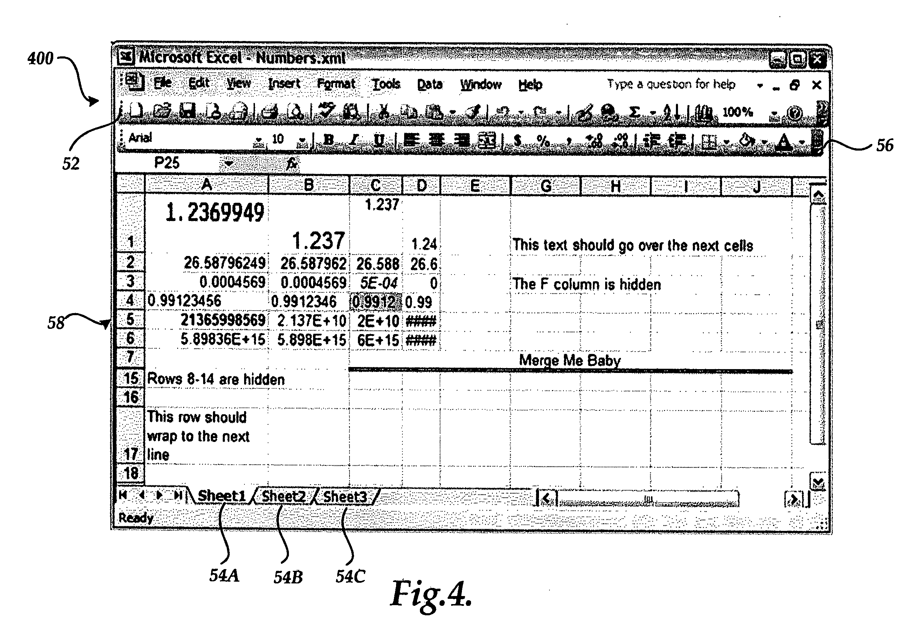

Referring now to FIGURE 4, an illustrative screen display provided by a spreadsheet application program 26 when utilized to open a workbook 44 for viewing and editing will be described. In particular, FIGURE 4 shows a user interface window 400 provided by a spreadsheet application program 26 when utilized to open a workbook 44 for viewing and editing. The window 400 includes a number of conventional controls, including a command menu 50, a toolbar 52, and a formatting toolbar 56. As known to those skilled in the art, the menus and icons provided by these user interface toolbars may be utilized by a user of the spreadsheet application 26 to access the various features of the spreadsheet application program 26.

As also shown in FIGURE 4, the window 400 includes a grid 58 having one or more rows and one or more columns. The columns and rows are familiar to users of conventional spreadsheet application programs and define the workspace for the currently selected workbook. As also known to those skilled in the art, each of the cells defined by a particular row and column combination can be edited with numerical or text data and commands may be performed on the various cells to perform virtually unlimited types of analysis operations. The various operations and functions available through the spreadsheet application program 26 are well known to those skilled in the art.

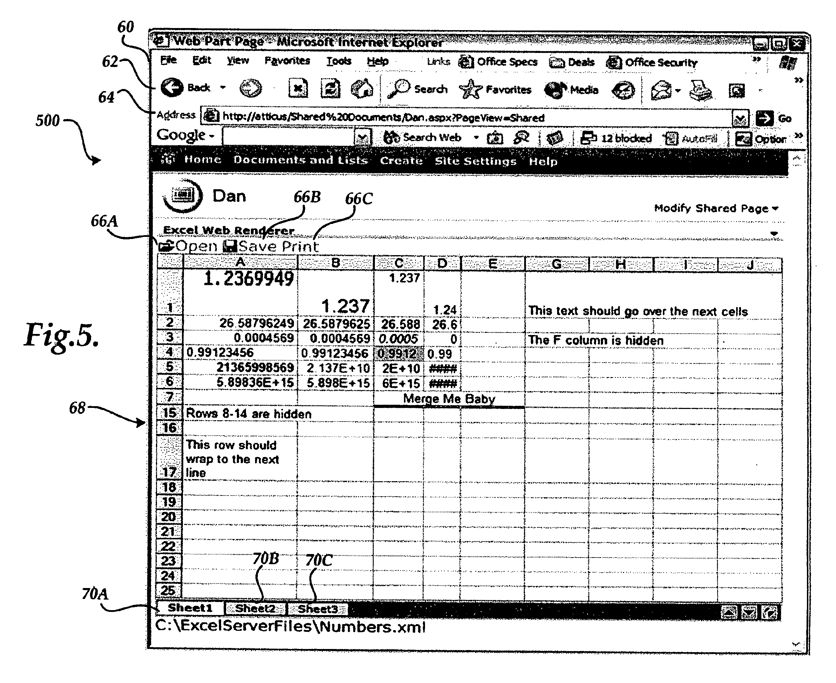

The window 400 also includes various user interface elements for navigating within the currently selected spreadsheet or within other spreadsheets within the currently selected workbook. For instance, the window 400 shown in FIGURE 4 includes user interface buttons 54A-54C which, when selected by a user, cause the appropriate spreadsheet to be displayed within the window 400. The other user interface items within the window 400 for navigating within the current spreadsheet or to other spreadsheets, such as the user interface slider bars shown in FIGURE 4, are well known to those skilled in the art. As will be described in greater detail below, the various embodiments of the invention provided herein allow the Web browser application 10 to provide a visual display that is substantially similar to the display provided by the spreadsheet application 26 when viewing the same workbook 44. A screen display provided by the Web browser application 10 when utilized to view the same workbook as utilized by the spreadsheet application 26 to generate the window 400 shown in FIGURE 4 will be described below with reference to FIGURE 5.

As discussed briefly above, FIGURE 5 illustrates the screen display provided by the Web browser application 10 when utilized to open a workbook 44. In particular, the screen display illustrated in FIGURE 5 illustrates the screen display provided by the Web browser application 10 when utilizing the various aspects of the present invention to open the same workbook 44 as opened by the spreadsheet application 26 and utilized to provide the screen display shown in FIGURE 4. It should be appreciated that the screen display shown in FIGURE 5 provided by the Web browser application 10 is substantially similar to the display provided by the spreadsheet application 26 shown in FIGURE 4.

As shown in FIGURE 5, the window 500 provided by the Web browser application 10 includes a number of conventional components associated with Web browser application programs. In particular, the window includes a menu bar 60, a tool bar 62, and an address bar 64. As known to those skilled in the art, these user interface items provide access to the various functions provided by the Web browser application 10. When utilizing the various aspects of the present invention described herein, the Web browser application 10 is also operative to provide a screen display that includes a grid 68. It should be appreciated that the grid 68 shown in FIGURE 5 is substantially similar to the grid 58 shown in FIGURE 4. In particular, the grid 68 shown in FIGURE 5 defines a number of rows, columns, and corresponding cells. Moreover, the cells shown in the grid 68 include the same content as the cells shown in the grid 58. The cells of the grid 68 are also formatted utilizing the same font, color, justification, and other attributes as the contents of the cells shown in the grid 58 in FIGURE 4.

As also shown in FIGURE 5, the display provided by the Web browser application 10 includes a number of user interface buttons within the rendered page for performing various functions on the currently shown workbook. For instance, the button 66A may be selected in order to open the currently selected workbook within the spreadsheet application 26. The user interface button 66B may be utilized to save any modifications made to the currently opened workbook to the version of the workbook 44 stored at the calculation server 32. Additionally, a button 66C may be utilized to print the contents of the currently opened workbook.

Other buttons may be utilized to navigate between several spreadsheets contained within a single workbook. For instance, the user interface button 70A-70C shown within the context of the Web browser application 10 in FIGURE 5 perform a similar function to the buttons 54A-54C illustrated in FIGURE 4 with respect to the display provided by the spreadsheet application program 26. Additional details will be provided below with respect to FIGURES 6-9 regarding the interactivity provided by the embodiments of the invention within the Web browser application 10.

Turning now to FIGURE 6, an illustrative routine 600 will be described that illustrates various aspects of the invention for allowing a user to interact with a workbook rendered within the context of the Web browser application 10. The routine 600 begins at operation 602, where the contents of the Web page 24, including the HTML necessary for displaying the Web page and the scripts necessary for allowing a user to interact with the spreadsheet are rendered. The routine 600 then continues to operation 604, where the Web browser application 10 receives user input for interacting with the displayed spreadsheet. For instance, the Web browser application 10 may receive from the user input modifying the contents of a pivot table, requesting that another spreadsheet in a workbook be displayed, for saving any modifications to the spreadsheet, or for performing other functions. It should be appreciated that one or more scripts may be executed by the Web browser application 10 to receive the input and perform the communication with the application server 30 necessary to cause the interaction to be performed.

Once input has been received from a user at operation 604, the appropriate script transmits data to the application server 30 identifying the particular action taken by the user at operation 606. At operation 608, the application server 30 determines the particular action taken by the user. Once the requested action has been identified, the application server 30 transmits to the calculation server 32 a command requesting that the particular action be taken on the specific workbook. As discussed above, the application server 30 communicates with the calculation server 32 through the server API 38.

In response to receiving the request from the application server 30 to perform a command on the current workbook, the spreadsheet calculation server program 40 performs the requested action on the workbook 44. For instance, if a user has requested that elements within a pivot table be rearranged, the spreadsheet calculation server 40 performs the actual rearrangement of the elements. Once the action has been performed, the spreadsheet calculation server program 40 recalculates the workbook at operation 612. The recalculated workbook reflects the changes made by the user to the currently open workbook through the Web browser application 10.

Once the workbook 44 has been recalculated, the calculation server 32 converts the recalculated workbook to the XMLSS format. This process is described above with reference to FIGURE 3. Once the recalculated workbook has been converted to the XMLSS format, the recalculated workbook is transmitted from the calculation server 32 to the application server 30. At the application server 30, the spreadsheet Web renderer 36 converts the XMLSS version of the recalculated spreadsheet to a format renderable by the Web browser application 10. The renderable version of the recalculated spreadsheet is then transmitted to the Web browser application 10 where it may be rendered and displayed to a user. This process is described above with reference to FIGURE 3 and operations 312-318.

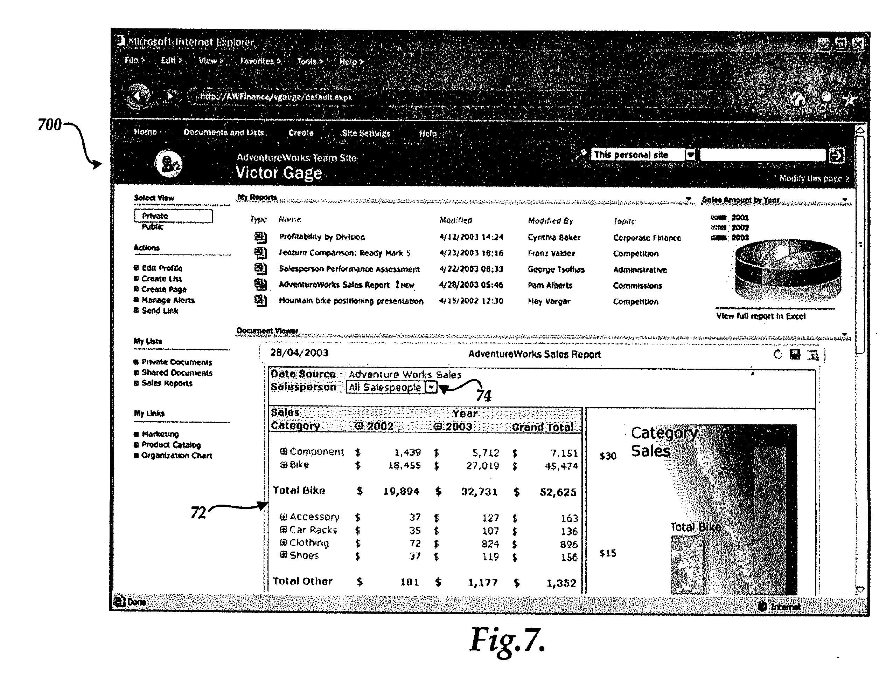

Referring now to FIGURES 7-9, additional details will be provided regarding a user's ability to interact with a spreadsheet within the context of the Web browser application 10. In particular, as shown in FIGURE 7, a window 700 generated by the Web browser application 10 is shown. The window 700 includes a pivot table 72 as part of a spreadsheet displayed within the Web browser application 10 in the manner described above. The pivot table 72 includes a user interface button 74 for causing a dropdown menu to be displayed. Through the dropdown menu, a user or group of users may be selected. In response to the selection of such a user, the pivot table 72 will be updated to reflect this selection.

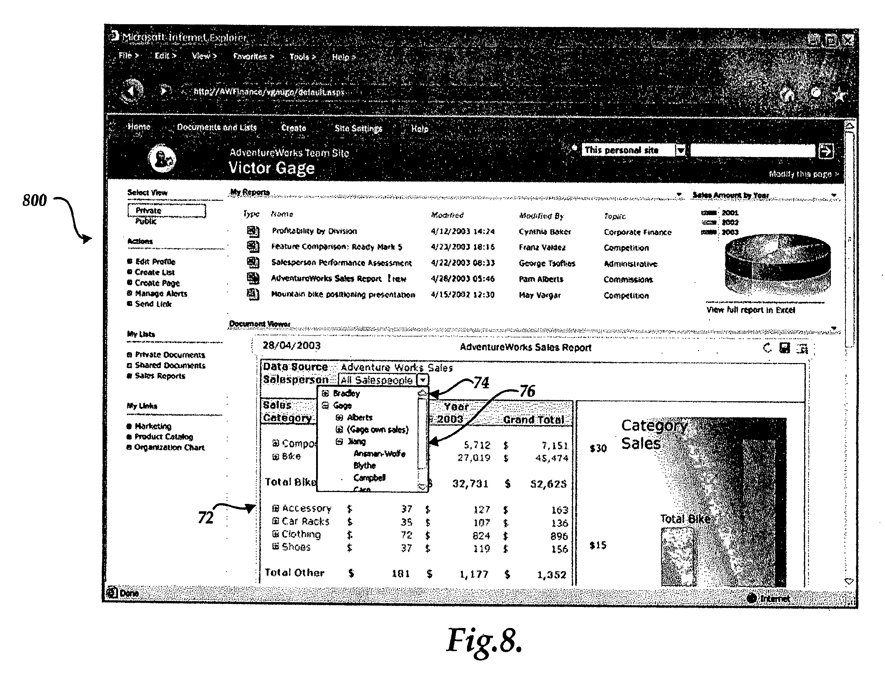

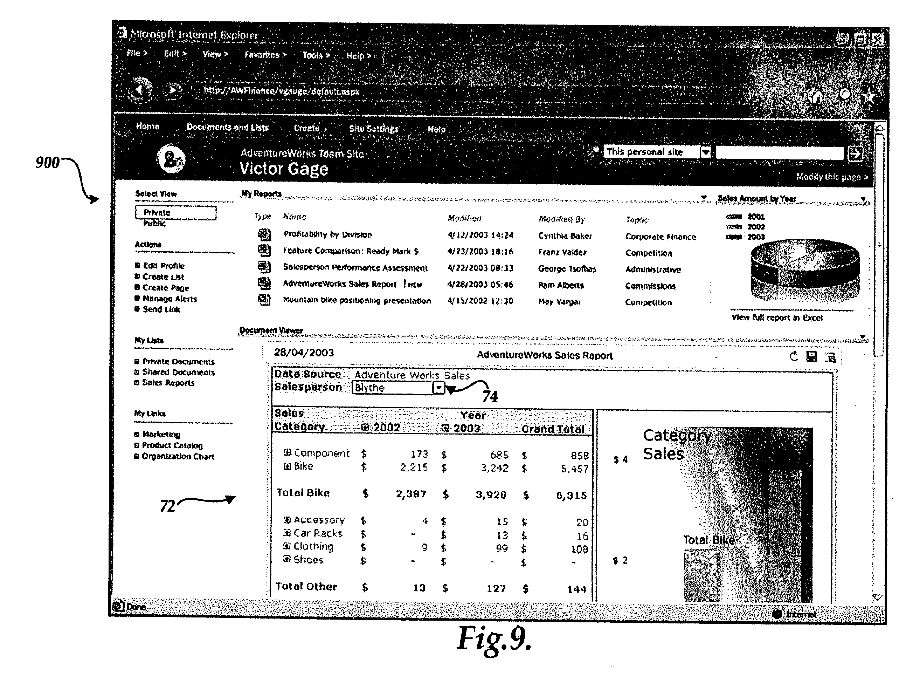

As an example, in FIGURE 8, the button 74 has been selected to cause the dropdown menu 76 to be displayed by the Web browser application 10. The user may then select from the dropdown menu 76 one of the displayed names. As an example, if the user selects the name "Blythe", the contents of the pivot table 72 will be recalculated and redisplayed as shown in FIGURE 9.

In order to recalculate and redisplay the contents of the pivot table 72 in response to the selection of the name from the dropdown menu 76, a request must be sent from the client computer to the application server 30 and processed by the calculation server 32 as described above with reference to FIGURE 6. Once the workbook has been recalculated, it may be transmitted back to the Web browser application program 10 as described above with respect to FIGURE 3. In this manner, virtually any type of interaction may be performed on the spreadsheet displayed within the Web browser application program 10.

Based on the foregoing, it should be appreciated that the various embodiments of the invention include a method, system, apparatus, and computer-readable medium for enabling a spreadsheet to be viewed and modified within the context of a Web browser application program. The above specification, examples and data provide a complete description of the manufacture and use of the composition of the invention. Since many embodiments of the invention can be made without departing from the scope of the invention, the invention resides in the claims hereinafter appended.

## Claims

1. A method for viewing and interacting with a spreadsheet document from within the context of a Web browser application program (10), the method comprising:
receiving, at an application server, a request from a client computer storing the Web browser application program to open a spreadsheet document (44) in the Web browser application program;
in response to the request, generating a representation of only a portion of the spreadsheet document capable of being rendered by the Web browser application program, wherein the representation of the portion of the spreadsheet document comprises only markup language tags for use in rendering the representation of the portion of the spreadsheet document and scripts executable within the context of the Web browser for providing interactivity with the viewable version of the portion of the spreadsheet document;
transmitting, by the application server, the representation of only the portion of the spreadsheet document to the client computer storing the Web browser application program;
providing a viewable version of the portion of the spreadsheet document by rendering the representation of the portion of the spreadsheet document in the Web browser;
receiving a user request to modify an aspect of the portion of the spreadsheet document rendered within the Web browser; and
in response to the request, executing a one of the scripts to perform the requested modification,
wherein the scripts provide functionality for editing and interacting with the spreadsheet from within the context of the Web browser, and
wherein the scripts provide functionality to load the native version of the spreadsheet in the spreadsheet application, wherein in response to the request that the native spreadsheet file be opened in the spreadsheet application program, the spreadsheet application program will be launched and the native spreadsheet file corresponding to the portion of the spreadsheet expressed by a Web page will be loaded by the spreadsheet application program, the Web page including scripts allowing a user of a computer to interact with the display provided by the Web browser application and to modify the spreadsheet.

2. The method of Claim 1, wherein the viewable version of the portion of the spreadsheet document appears substantially similar to a visual display provided by a spreadsheet application program (26) when utilized to view the spreadsheet document.

3. The method of Claim 1, wherein executing a one of the scripts to perform the requested modification comprises transmitting to a server computer data identifying the requested modification, and wherein the method further comprises:
receiving the data identifying the requested modification;
in response to receipt of the data, generating a recalculated spreadsheet document, the recalculated spreadsheet document reflecting the requested modification;
generating a representation of a portion of the recalculated spreadsheet document capable of being rendered by the Web browser application program; and
transmitting the representation of the portion of the recalculated spreadsheet document to the Web browser application program.

4. The method of Claim 3, wherein generating a representation of a portion of the spreadsheet document capable of being rendered by the Web browser application program comprises:
retrieving the spreadsheet document;
converting a portion of the spreadsheet document into a document expressed using the extensible markup language spreadsheet format; and
converting the document expressed using the extensible markup language spreadsheet format into a representation of the portion of the spreadsheet document expressed using a hypertext markup language and including markup language tags and scripts capable of being rendered by the Web browser application.

5. The method of Claim 1, wherein the spreadsheet document is a workbook.

6. A computer-readable medium having computer-executable instructions stored thereon which, when executed by a computer, will cause the computer to perform the method of Claim 1.

7. A system for allowing a spreadsheet document to be viewed and modified from within the context of a Web browser application program, the system comprising:
a first server computer (30) operative to execute program code for receiving a request for a renderable version of a spreadsheet document from the Web browser application program, for requesting from a second server computer (32) only a portion of a version of the spreadsheet document expressed using the extensible markup language spreadsheet (XMLSS) format, for receiving from the second server computer only the portion of the XMLSS version of the spreadsheet document, for converting the portion of the XMLSS version of the spreadsheet document to a renderable version of the portion of the spreadsheet document, and for responding to the request from the Web browser with only the portion of the renderable version of the spreadsheet document, wherein the portion of the renderable version of the spreadsheet document comprises only markup language tags for use in rendering the spreadsheet document and scripts executable within the Web browser for providing interactivity with the viewable version of the portion of the spreadsheet document; and
when a one of the scripts is executed within the Web browser, operative to execute program code for receiving a request from the Web browser application program to modify an aspect of the portion of the spreadsheet document rendered within the Web browser, and for requesting from the second server computer to perform the requested modification; and
the second server computer operative to receive the request from the first server computer for only a portion of the XMLSS version of the spreadsheet document, to retrieve only a portion of the native version of the spreadsheet document from a database (42), to convert only the portion of the native version of the spreadsheet document to the XMLSS version of the portion of the spreadsheet document, and to respond to the request from the first server computer with the portion of the XMLSS version of the spreadsheet document; and
operative to receive the request from the first server computer to modify an aspect of the portion of the spreadsheet document rendered within the Web browser, and for performing the requested modification,
wherein the scripts provide functionality for editing and interacting with the spreadsheet from within the context of the Web browser, and
wherein the scripts provide functionality to load the native version of the spreadsheet in the spreadsheet application, wherein in response to the request that the native spreadsheet file be opened in the spreadsheet application program, the spreadsheet application program will be launched and the native spreadsheet file corresponding to the portion of the spreadsheet expressed by a Web page will be loaded by the spreadsheet application program, the Web page including scripts allowing a user of a computer to interact with the display provided by the Web browser application and to modify the spreadsheet.

8. The system of Claim 7, wherein the renderable version of the portion of the spreadsheet document appears substantially similar to a visual display provided by a spreadsheet application program when utilized to view the native version of the spreadsheet document.

9. The system of Claim 8, further comprising a Web browser application program operative to request from the first server computer the renderable version of the spreadsheet document and further operative to render the portion of the renderable version of the spreadsheet document when received from the first server computer.

## Patentansprüche

1. Verfahren zum Betrachten eines Tabellenkalkulations-Dokumentes und zum Interagieren mit diesem im Kontext eines Web-Browser-Anwendungsprogramms (10), wobei das Verfahren umfasst:
Empfangen einer Anforderung, ein Tabellenkalkulations-Dokument (44) in dem Web-Browser-Anwendungsprogramm zu öffnen, von einem Client-Computer, der das Web-Browser-Anwendungsprogramm speichert, an einem Anwendungs-Server;
Generieren einer Darstellung lediglich eines Teils des Tabellenkalkulations-Dokumentes, der durch das Web-Browser-Anwendungsprogramm wiedergegeben werden kann, in Reaktion auf die Anforderung, wobei die Darstellung des Teils des Tabellenkalkulations-Dokumentes nur Auszeichnungssprachen-Tags zur Verwendung beim Wiedergeben der Darstellung des Teils des Tabellenkalkulations-Dokumentes und Skripte umfasst, die innerhalb des Kontextes des Web-Browsers ausgeführt werden können, um Interaktion mit der betrachtbaren Version des Teils des Tabellenkalkulations-Dokumentes zu ermöglichen;
Senden der Darstellung lediglich des Teils des Tabellenkalkulations-Dokumentes durch den Anwendungs-Server zu dem Client-Computer, der das Web-Browser-Anwendungsprogramm speichert;
Bereitstellen einer betrachtbaren Version des Teils des Tabellenkalkulations-Dokumentes durch Wiedergeben der Darstellung des Teils des Tabellenkalkulations-Dokumentes in dem Web-Browser;
Empfangen einer Benutzeranforderung zum Modifizieren eines Aspektes des in dem Web-Browser wiedergegebenen Teils des Tabellenkalkulations-Dokumentes; und
Ausführen eines der Skripte zum Durchführen der angeforderten Modifikation in Reaktion auf die Anforderung,
wobei die Skripte Funktionalität zum Editieren der Tabelle und Interagieren damit innerhalb des Kontextes des Web-Browser bereitstellen, und
die Skripte Funktionalität zum Laden der nativen Version der Tabelle in die Tabellenkalkulations-Anwendung bereitstellen und in Reaktion auf die Anforderung zum Öffnen der nativen Tabellenkalkulations-Datei in dem Tabellenkalkulations-Anwendungsprogramm das Tabellenkalkulations-Anwendungsprogramm gestartet wird, und die native Tabellenkalkulations-Datei, die dem durch eine Web-Seite ausgedrückten Teil der Tabelle entspricht, durch das Tabellenkalkulations-Anwendungsprogramm geladen wird, wobei die Web-Seite Skripte enthält, die es einem Benutzer eines Computers gestatten, in Interaktion mit der durch die Web-Browser-Anwendung bereitgestellten Anzeige zu treten und die Tabelle zu modifizieren.

2. Verfahren nach Anspruch 1, wobei die betrachtbare Version des Teils des Tabellenkalkulations-Dokumentes im Wesentlichen einer durch ein Tabellenkalkulations-Anwendungsprogramm (26) bereitgestellten visuellen Anzeige bei Nutzung zum Betrachten des Tabellenkalkulations-Dokumentes gleicht.

3. Verfahren nach Anspruch 1, wobei Ausführen eines der Skripte zum Durchführen der angeforderten Modifikation umfasst, dass Daten, die die angeforderte Modifikation angeben, zu einem Server-Computer gesendet werden, und das Verfahren des Weiteren umfasst:
Empfangen der Daten, die die angeforderte Modifikation angeben;
in Reaktion auf Empfang der Daten Erzeugen eines neu berechneten Tabellenkalkulations-Dokumentes, wobei sich in dem neu berechneten Tabellenkalkulations-Dokument die angeforderte Modifikation widerspiegelt;
Erzeugen einer Darstellung eines Teils des neu berechneten Tabellenkalkulations-Dokumentes, der durch das Web-Browser-Anwendungsprogramm wiedergegeben werden kann; und
Senden der Darstellung des Teils des neu berechneten Tabellenkalkulations-Dokumentes zu dem Web-Browser-Anwendungsprogramm.

4. Verfahren nach Anspruch 3, wobei Erzeugen einer Darstellung eines Teils des Tabellenkalkulations-Dokumentes, der durch das Web-Browser-Anwendungsprogramm wiedergegeben werden kann, umfasst:
Abrufen des Tabellenkalkulations-Dokumentes;
Umwandeln eines Teils des Tabellenkalkulations-Dokumentes in ein Dokument, das unter Verwendung des XML-Tabellenkalkulationsformats ausgedrückt wird; und
Umwandeln des unter Verwendung des XML-Tabellenkalkulations-Formats ausgedrückten Dokumentes in eine Darstellung des Teils des Tabellenkalkulations-Dokumentes, der unter Verwendung einer HTML-Sprache ausgedrückt wird und Auszeichnungssprachen-Tags sowie Skripte enthält, die durch die Web-Browser-Anwendung wiedergegeben werden können.

5. Verfahren nach Anspruch 1, wobei das Tabellenkalkulations-Dokument eine Arbeitsmappe ist.

6. Computerlesbares Medium, auf dem durch Computer ausführbare Befehle gespeichert sind, die, wenn sie durch einen Computer ausgeführt werden, den Computer veranlassen, das Verfahren nach Anspruch 1 durchzuführen.

7. System, das zulässt, dass ein Tabellenkalkulations-Dokument innerhalb des Kontextes eines Web-Browser-Anwendungsprogramms betrachtet und modifiziert wird, wobei das System umfasst:
einen ersten Server-Computer (30), der in Funktion Programmcode zum Empfangen einer Anforderung einer Version eines Tabellenkalkulations-Dokumentes von dem Web-Browser-Anwendungsprogramm, die wiedergegeben werden kann, zum Anfordern nur eines Teils einer Version des Tabellenkalkulations-Dokumentes von einem zweiten Server-Computer (32), der unter Verwendung des XMLSS-Formates (extensible markup language spreadsheet format) ausgedrückt wird, zum Empfangen nur des Teils der XMLSS-Version des Tabellenkalkulations-Dokumentes von dem zweiten Server-Computer, zum Umwandeln des Teils der XMLSS-Version des Tabellenkalkulations-Dokumentes in eine Version des Teils des Tabellenkalkulations-Dokumentes, die wiedergegeben werden kann, sowie zum Reagieren auf die Anforderung von dem Web-Browser lediglich mit dem Teil der Version des Tabellenkalkulations-Dokumentes ausführt, der wiedergegeben werden kann, wobei der Teil der Version des Tabellenkalkulations-Dokumentes, die wiedergegeben werden kann, nur Auszeichnungssprachen-Tags zur Verwendung beim Wiedergeben des Tabellenkalkulations-Dokumentes sowie Skripte umfasst, die innerhalb des Web-Browsers ausgeführt werden können, um Interaktion mit der betrachtbaren Version des Teils des Tabellenkalkulations-Dokumentes zu ermöglichen; und
der in Funktion, wenn eines der Skripte innerhalb des Web-Browsers ausgeführt wird, Programmcode zum Empfangen einer Anforderung zum Modifizieren eines Aspekts des innerhalb des Web-Browsers wiedergegebenen Teils des Tabellenkalkulations-Dokumentes von dem Web-Browser-Anwendungsprogramm sowie zum Anfordern von Durchführung der angeforderten Modifikation von dem zweiten Server-Computer ausführt; und
wobei der zweite Server-Computer in Funktion die Anforderung lediglich eines Teils der XMLSS-Version des Tabellenkalkulations-Dokumentes von dem ersten Server-Computer empfängt, nur einen Teil der nativen Version des Tabellenkalkulations-Dokumentes von einer Datenbank (42) abruft, nur den Teil der nativen Version des Tabellenkalkulations-Dokumentes in die XMLSS-Version des Teils des Tabellenkalkulations-Dokumentes umwandelt und auf die Anforderung von dem ersten Server-Computer mit dem Teil der XMLSS-Version des Tabellenkalkulations-Dokumentes reagiert; und
in Funktion die Anforderung zum Modifizieren eines Aspektes des in dem Web-Browser wiedergegebenen Teils des Tabellenkalkulations-Dokumentes von dem ersten Server-Computer empfängt und die angeforderte Modifikation durchführt,
wobei die Skripte Funktionalität zum Editieren der Tabelle und Interagieren damit innerhalb des Kontexts des Web-Browser bereitstellen, und
die Skripte Funktionalität zum Laden der nativen Version der Tabelle in die Tabellenkalkulations-Anwendung bereitstellen und in Reaktion auf die Anforderung zum Öffnen der nativen Tabellenkalkulations-Datei in dem Tabellenkalkulations-Anwendungsprogramm das Tabellenkalkulations-Anwendungsprogramm gestartet wird, und die native Tabellenkalkulations-Datei, die dem durch eine Web-Seite ausgedrückten Teil der Tabelle entspricht, durch das Tabellenkalkulations-Anwendungsprogramm geladen wird, wobei die Web-Seite Skripte enthält, die es einem Benutzer eines Computers gestatten, in Interaktion mit der durch die Web-Browser-Anwendung bereitgestellten Anzeige zu treten und die Tabelle zu modifizieren.

8. System nach Anspruch 7, wobei die Version des Teils des Tabellenkalkulations-Dokumentes, die wiedergegeben werden kann, im Wesentlichen einer durch ein Tabellenkalkulations-Anwendungsprogramm bereitgestellten visuellen Anzeige bei Nutzung zum Betrachten der nativen Version des Tabellenkalkulations-Dokumentes gleicht.

9. System nach Anspruch 8, das des Weiteren ein Web-Browser-Anwendungsprogramm umfasst, das in Funktion von dem ersten Server-Computer die Version des Tabellenkalkulations-Dokumentes anfordert, die wiedergegeben werden kann, und das des Weiteren in Funktion den Teil der Version des Tabellenkalkulations-Dokumentes, der wiedergegeben werden kann, bei Empfang von dem ersten Server-Computer wiedergibt.

## Revendications

1. Procédé pour visualiser un document de feuille de calcul et entrer en interaction avec ce dernier à partir du contexte d'un programme d'application de navigateur Web (10), comprenant :
la réception, au niveau d'un serveur d'application, d'une demande d'ouverture, provenant d'un ordinateur client stockant le programme d'application de navigateur Web, d'un document de feuille de calcul (44) dans le programme d'application de navigateur Web ;
en réponse à la demande, la génération d'une représentation de seulement une partie du document de feuille de calcul pouvant être rendue par le programme d'application de navigateur Web, la représentation de la partie du document de feuille de calcul comprenant seulement des balises de langage de balisage à utiliser au niveau du rendu de la représentation de la partie du document de feuille de calcul et des scripts exécutables dans le contexte du navigateur Web pour offrir une interactivité avec la version visualisable de la partie du document de feuille de calcul ;
la transmission, par le serveur d'application, de la représentation de seulement la partie du document de feuille de calcul à l'ordinateur client stockant le programme d'application de navigateur Web ;
la fourniture de la version visualisable de la partie du document de feuille de calcul par le rendu de la représentation de la partie du document de feuille de calcul dans le navigateur Web ;
la réception d'une demande d'utilisateur de modification d'un aspect de la partie du document de feuille de calcul rendue dans le navigateur Web ; et
en réponse à la demande, l'exécution de l'un des scripts afin d'effectuer la modification demandée,
dans lequel les scripts assurent une fonctionnalité d'édition de feuille de calcul et d'interaction avec celle-ci à partir du contexte du navigateur Web, et
dans lequel les scripts assurent une fonctionnalité de chargement de la version originale de la feuille de calcul dans l'application de feuille de calcul, dans lequel, en réponse à la demande d'ouverture du fichier de feuille de calcul originale dans le programme d'application de feuille de calcul, le programme d'application de feuille de calcul se lance et le fichier de feuille de calcul originale correspondant à la partie de la feuille de calcul exprimée par une page Web est chargé par le programme d'application de feuille de calcul, la page Web comprenant des scripts permettant à un utilisateur d'un ordinateur d'entrer en interaction avec l'affichage fourni par l'application de navigateur Web et de modifier la feuille de calcul.

2. Procédé conformément à la revendication 1, dans lequel la version visualisable de la partie du document de feuille de calcul apparaît comme étant sensiblement similaire à un affichage visuel fourni par un programme d'application de feuille de calcul (26) lorsqu'il est utilisé pour visualiser le document de feuille de calcul.

3. Procédé conformément à la revendication 1, dans lequel l'exécution de l'un des scripts en vue d'effectuer la modification demandée comprend la transmission, à un ordinateur serveur, de données identifiant la modification demandée, et dans lequel le procédé comprend en outre :
la réception des données identifiant la modification demandée;
en réponse à la réception des données, la génération d'un document de feuille de calcul recalculé, ledit document reflétant la modification demandée ;
la génération d'une représentation d'une partie du document de feuille de calcul recalculé pouvant être rendue par le programme d'application de navigateur Web ; et
la transmission de la représentation de la partie du document de feuille de calcul recalculé au programme d'application de navigateur Web.

4. Procédé conformément à la revendication 3, dans lequel la génération d'une représentation d'une partie du document de feuille de calcul pouvant être rendue par le programme d'application de navigateur Web comprend :
la récupération du document de feuille de calcul ;
la conversion d'une partie du document de feuille de calcul en un document exprimé à l'aide du format de feuille de calcul dans un langage de balisage extensible ; et
la conversion du document exprimé à l'aide du format de feuille de calcul dans un langage de balisage extensible en une représentation de la partie du document de feuille de calcul exprimé à l'aide d'un langage de balisage hypertexte et comprenant des balises de langage de balisage et des scripts pouvant être rendus par l'application de navigateur Web.

5. Procédé conformément à la revendication 1, dans lequel le document de feuille de calcul est un manuel d'instruction.

6. Support lisible par ordinateur sur lequel sont stockées des instructions exécutables par ordinateur, lesquelles, lorsqu'elles sont exécutées, vont amener l'ordinateur à exécuter le procédé conformément à la revendication 1.

7. Système pour permettre la visualisation et la modification d'un document de feuille de calcul à partir du contexte d'un programme d'application de navigateur Web, comprenant :
un premier ordinateur serveur (30) apte à exécuter un code de programme afin de recevoir une demande de version pouvant être rendue d'un document de feuille de calcul à partir du programme d'application de navigateur Web, de demander, d'un second ordinateur serveur (32), seulement une partie d'une version du document de feuille de calcul exprimé à l'aide du format de feuille de calcul dans un langage de balisage extensible (XMLSS), de recevoir, en provenance du second ordinateur serveur, seulement la partie de la version XMLSS du document de feuille de calcul, de convertir la partie de la version XMLSS du document de feuille de calcul en une version pouvant être rendue de la partie du document de feuille de calcul, et de répondre à la demande provenant du navigateur Web avec seulement la partie de la version pouvant être rendue du document de feuille de calcul, dans lequel la partie de la version pouvant être rendue du document de feuille de calcul comprend seulement des balises de langage de balisage à utiliser au niveau du rendu du document de feuille de calcul et des scripts exécutables dans le navigateur Web pour offrir une interaction avec la version visualisable de la partie du document de feuille de calcul ; et
lorsque l'un des scripts est exécuté dans le navigateur Web, apte à exécuter un code de programme pour recevoir une demande de modification, provenant du programme d'application de navigateur Web, d'un aspect de la partie du document de feuille de calcul rendue dans le navigateur Web, et pour demander au second ordinateur serveur d'effectuer la modification demandée ; et
le second ordinateur serveur apte à recevoir la demande en provenance du premier ordinateur serveur pour seulement une partie de la version XMLSS du document de feuille de calcul, afin de récupérer seulement une partie de la version originale du document de feuille de calcul dans une base de données (42), de convertir seulement la partie de la version originale du document de feuille de calcul en la version XMLSS de la partie du document de feuille de calcul, et de répondre à la demande provenant du premier ordinateur serveur avec la partie de la version XMLSS du document de feuille de calcul ; et
apte à recevoir la demande de modification, du premier ordinateur serveur, d'un aspect de la partie du document de feuille de calcul rendue dans le navigateur Web, et pour effectuer la modification demandée,
dans lequel les scripts assurent une fonctionnalité d'édition de la feuille de calcul et d'interaction avec celle-ci dans le contexte du navigateur Web, et
dans lequel les scripts assurent une fonctionnalité de chargement de la version originale de la feuille de calcul dans l'application de feuille de calcul, dans lequel, en réponse à la demande d'ouverture du fichier de feuille de calcul originale dans le programme d'application de feuille de calcul, ledit programme est lancé et le fichier de feuille de calcul originale correspondant à la partie de la feuille de calcul exprimée par une page Web est chargé par le programme d'application de feuille de calcul, la page Web comprenant des scripts permettant à un utilisateur d'un ordinateur d'entrer en interaction avec l'affichage fourni par l'application de navigateur Web et de modifier la feuille de calcul.

8. Système conformément à la revendication 7, dans lequel la version pouvant être rendue de la partie du document de feuille de calcul apparaît comme étant sensiblement similaire à un affichage visuel fourni par un programme d'application de feuille de calcul lors de son utilisation pour visualiser la version originale du document de feuille de calcul.

9. Système conformément à la revendication 8 comprenant en outre un programme d'application de navigateur Web apte à demander du premier ordinateur serveur la version pouvant être rendue du document de feuille de calcul et en outre apte à rendre la partie de la version pouvant être rendue du document de feuille de calcul lors de sa réception en provenance du premier ordinateur serveur.
